# FASCICULE DE BREVET EUROPEEN

(11) **EP 3 867 155 B1**
(45) Date de publication et mention de la délivrance du brevet: **31.05.2023**
(21) Numéro de dépôt: 19842589.4
(22) Date de dépôt: 25.11.2019
(51) Int. Cl.: B64G 1/40, F17C 13/08, F17C 13/00, B60K 15/077, B65D 90/52, F02K 9/60

(54) **DISPOSITIF D'AMORTISSEMENT DE FLUIDE DANS UN RÉSERVOIR, EN PARTICULIER D'UN ENGIN SPATIAL**
VORRICHTUNG ZUR DÄMPFUNG VON FLÜSSIGKEIT IN EINEM RESERVOIR, INSBESONDERE EINES RAUMFAHRZEUGS
DEVICE FOR DAMPING FLUID IN A RESERVOIR, IN PARTICULAR OF A SPACECRAFT

(30) Priorité: 04.12.2018 FR 1872270
(43) Date de publication de la demande: 25.08.2021
(73) Titulaire: ArianeGroup SAS, 78130 Les Mureaux (FR)
(72) Inventeur: PEYRAUD, François, 78200 MANTES LA JOLIE (FR); DECOT, Eric, 60340 VILLERS SAINT LEU (FR)
(74) Mandataire: Brevalex
(86) Numéro de dépôt international: PCT/FR2019/052796
(87) Numéro de publication internationale: WO 2020/115397

(56) Documents cités:
- US-A- 3 508 578
- US-A- 5 901 557
- US-A- 6 014 987
- US-A1- 2014 196 790

## Description

### DOMAINE TECHNIQUE

La présente invention concerne un dispositif d'amortissement d'un fluide contenu dans un réservoir.

### ÉTAT DE LA TECHNIQUE

Bien que non exclusivement, la présente invention s'applique plus particulièrement à un réservoir d'un engin spatial.

Le vol d'un engin spatial, tel qu'une fusée ou un lanceur, est composé de plusieurs phases, et se termine par le largage et le déploiement d'une charge utile, notamment d'un satellite. L'engin spatial comprend généralement une pluralité d'étages successifs. Chacun de ces étages est pourvu d'un moteur-fusée dont le combustible est un propergol, c'est-à-dire un mélange de plusieurs ergols contenus dans plusieurs réservoirs agencés dans chaque étage.

Le déplacement de l'engin spatial, au cours de chacune de ces phases, est assuré par la combustion du propergol dans le moteur-fusée d'un étage. Lorsque la totalité du propergol d'un étage a été consommée, l'étage correspondant se sépare de l'engin spatial qui entame alors une nouvelle phase de vol grâce à la combustion du propergol contenu dans les réservoirs de l'étage suivant.

En particulier, la charge utile se trouve généralement dans le dernier étage, appelé étage supérieur de l'engin spatial. Le propergol utilisé dans le moteur-fusée de l'étage supérieur comprend deux ergols cryogéniques, à savoir, de l'oxygène liquide et de l'hydrogène liquide. Ces deux ergols cryogéniques sont maintenus à l'état de liquide dans deux réservoirs séparés agencés l'un au-dessus de l'autre dans l'étage supérieur.

Au cours des phases de vol précédant le déploiement de la charge utile, les manoeuvres de l'engin spatial effectuées sous micro gravité ou faible gravité peuvent engendrer de larges mouvements des ergols liquides dans leurs réservoirs. Ces mouvements sont plus importants pour l'hydrogène liquide car il s'agit d'un fluide de faible densité. Bien que les réservoirs soient refroidis afin de maintenir les ergols dans leur phase liquide, ils peuvent comprendre des zones dont la température est supérieure à la température critique de vaporisation. Or, une manoeuvre peut provoquer un mouvement non maîtrisé de l'hydrogène liquide, tel que des mouvements de ballotement. L'hydrogène liquide se vaporise alors au contact de ces zones plus chaudes. Les produits générés par l'évaporation doivent alors être évacués hors du réservoir. Cette diminution de la quantité d'hydrogène liquide et donc de propergol utilisable par le moteur engendre une perte de performance de l'engin spatial. Cette perte de performance se manifeste par une diminution de la quantité d'hydrogène liquide pouvant atteindre plusieurs centaines de kilogrammes.

La plupart des systèmes visant à remédier au problème de la vaporisation des ergols sur des zones chaudes des réservoirs cherchent à minimiser la surface en contact entre l'hydrogène liquide et les zones chaudes des réservoirs. Or de tels systèmes sont onéreux. De plus, ils alourdissent considérablement l'étage supérieur, sans pour autant garantir la quantité réelle d'hydrogène liquide utilisable.

Ces systèmes actuels ne sont donc pas complètement satisfaisants.

Par ailleurs, le document US5901557 divulgue un réservoir pour engin spatial prévu pour stocker un fluide cryogénique sous pression en conditions de microgravité. Ce réservoir est équipé d'un système permettant d'extraire du réservoir uniquement la phase liquide. Ce système comprend notamment un filet agencé sur une armature rigide comprenant des tiges et des anneaux de manière à pouvoir être traversé par un liquide et à réduire les vitesses d'écoulement.

### EXPOSÉ DE L'INVENTION

La présente invention a pour but de remédier à cet inconvénient. Pour ce faire, elle concerne un dispositif d'amortissement d'un fluide destiné à un réservoir, en particulier d'un engin spatial.

Selon l'invention, ledit dispositif comporte une armature pourvue d'au moins un anneau et d'une pluralité de tiges, chacune desdites tiges étant fixée par une première extrémité autour dudit anneau, ledit dispositif comportant un filet agencé sur la pluralité de tiges et autour de l'anneau, le filet comprenant un maillage adapté à la viscosité du fluide (à amortir) de manière à amortir des mouvements dudit fluide, ledit dispositif comportant, de plus, une pluralité d'éléments de maintien, chacune des tiges étant agencée dans un élément de maintien par une seconde extrémité opposée à la première extrémité.

Ainsi, grâce à l'invention, on utilise un filet fixé sur une armature rigide qui amortit les mouvements de ballotement d'un fluide. De plus, la souplesse du filet permet de parvenir à ce résultat sans générer de phénomènes d'éclaboussures, comme indiqué ci-après.

De plus, le dispositif est configuré pour pouvoir être amené d'une position repliée à une position dépliée, la position repliée correspondant à une position du dispositif dans laquelle les tiges sont agencées sensiblement parallèlement entre elles et chacune desdites tiges forme un angle nul avec un axe dit longitudinal dudit dispositif, la position dépliée correspondant à une position du dispositif dans laquelle les tiges ne sont pas parallèles entre elles et chacune desdites tiges forme un angle dit angle de déploiement, ledit angle de déploiement étant non nul avec l'axe longitudinal.

Par ailleurs, avantageusement, chacun des éléments de maintien est destiné à être fixé sur une pièce et à maintenir le dispositif au moins dans la position dépliée.

En outre, de façon préférentielle, chacun des éléments de maintien comporte un système de verrouillage apte à verrouiller les tiges dans une position correspondant à une position dépliée du dispositif.

Par ailleurs, avantageusement, la valeur de l'angle de déploiement entre lesdites tiges et l'axe longitudinal du dispositif dépend d'un paramètre de porosité du maillage du filet.

De préférence, le paramètre de porosité est compris entre 0.3 et 0.5.

En outre, de façon préférentielle, l'anneau est extensible dans une direction dite radiale et configuré pour pouvoir être amené d'un premier état lorsque le dispositif est dans la position repliée à un second état lorsque le dispositif est dans la position dépliée, la taille dudit anneau dans ledit premier état étant inférieure à la taille dudit anneau dans ledit second état.

Par ailleurs, avantageusement, les tiges sont réparties à intervalles angulaires réguliers autour de l'anneau.

En outre, les tiges sont réalisées dans un alliage d'aluminium. L'utilisation de tiges en aluminium permet de ne pas alourdir le dispositif.

De plus, de façon avantageuse, le filet est réalisé dans un matériau polymère. L'utilisation d'un matériau polymère permet d'obtenir un filet à la fois souple et léger. La souplesse du filet permet d'amortir ou d'arrêter les mouvements de ballotement du fluide, notamment sans générer d'éclaboussures.

La présente invention concerne également un réservoir, en particulier pour engin spatial comprenant un dispositif d'amortissement de fluide tel que celui décrit ci-dessus.

Par ailleurs, avantageusement, le réservoir comprend une pièce agencée dans une partie inférieure, ladite pièce étant configurée pour fixer le dispositif sur ledit réservoir, ladite pièce étant amovible.

La présente invention concerne, de plus, un engin spatial comprenant un réservoir tel que celui décrit ci-dessus.

### BRÈVE DESCRIPTION DES FIGURES

Les figures annexées feront bien comprendre comment l'invention peut être réalisée. Sur ces figures, des références identiques désignent des éléments semblables.
[Fig 1] La figure 1 est une vue schématique en perspective d'un dispositif d'amortissement de fluide, dans une première configuration, dans un réservoir, selon un mode de réalisation préféré.
[Fig 2] La figure 2 est une vue schématique en perspective d'un dispositif d'amortissement de fluide, dans une seconde configuration, dans un réservoir, selon le mode de réalisation préféré.
[Fig 3] La figure 3 illustre une partie d'un dispositif d'amortissement de fluide dans la première configuration.
[Fig 4] La figure 4 illustre la même partie du dispositif d'amortissement de fluide dans la seconde configuration.
[Fig 5-6] La figure 5 illustre une autre partie du dispositif d'amortissement de fluide, selon un mode de réalisation particulier et la figure 6 illustre un dispositif d'amortissement de fluide dans la seconde configuration, selon un mode de réalisation particulier.

### DESCRIPTION DÉTAILLÉE

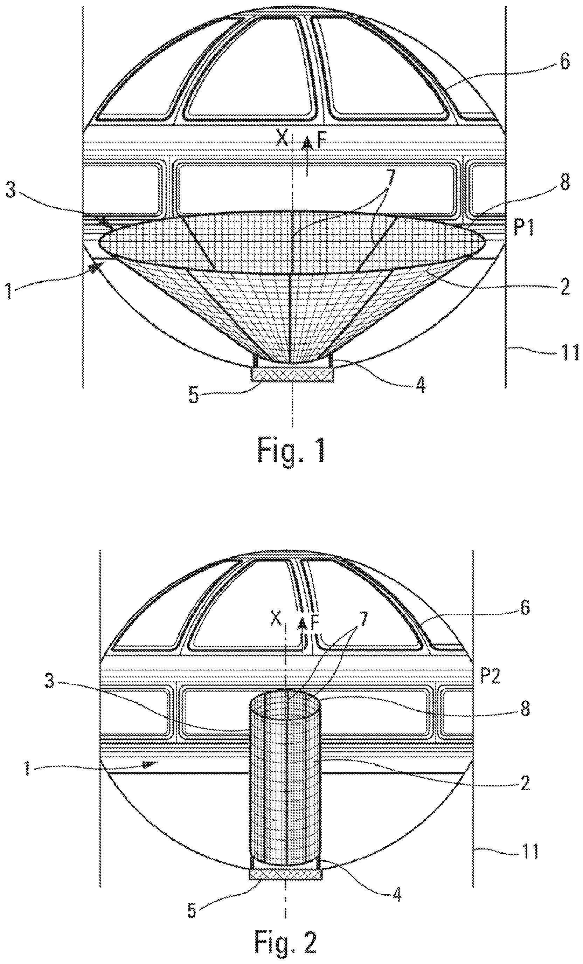

Le dispositif 1 d'amortissement de fluide (ci-après « dispositif 1 »), représenté schématiquement dans un mode de réalisation particulier sur la figure 1 et permettant d'illustrer l'invention, est destiné à permettre d'amortir un fluide dans un réservoir 6. De préférence, ce fluide est de l'hydrogène liquide présent dans le réservoir 6 d'un engin spatial, dont l'étage 11 comprenant le réservoir 6 est représenté très schématiquement sur la figure 1.

Dans le cadre de l'invention, ce dispositif 1 comprend, comme représenté sur les figures 1 et 2, un filet 2, une armature 3 sur laquelle est agencé le filet 2 et une pluralité d'éléments de maintien 4. Les éléments de maintien 4 sont aptes à maintenir le filet 2 et l'armature 3 dans une position fixe sur une pièce 5 du réservoir 6, notamment au cours du vol de l'engin spatial dans le cas d'un réservoir 6 d'un engin spatial.

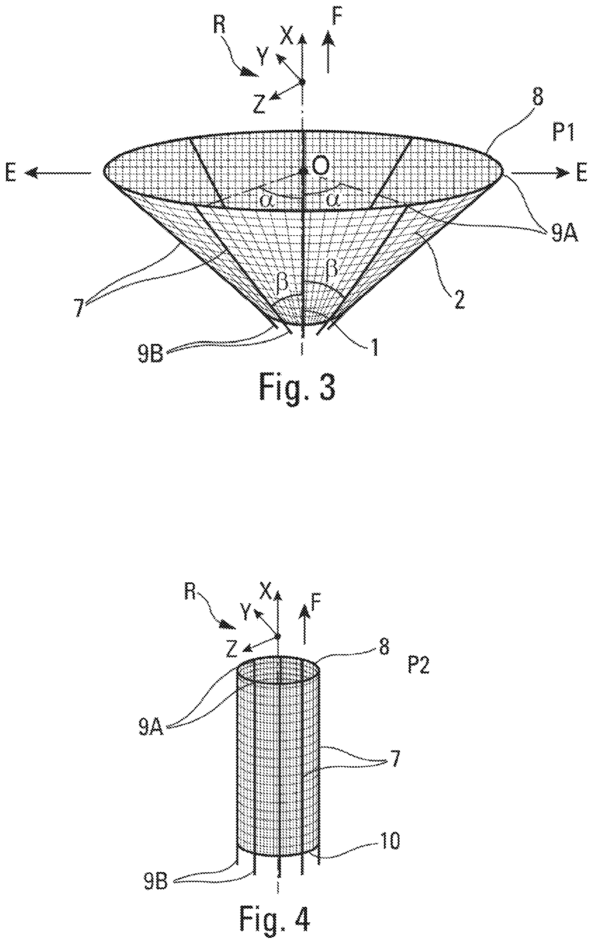

Dans la suite de la description et comme représenté sur les figures 3 et 4, on utilise un repère R associé au dispositif 1 et défini selon trois axes orthogonaux, à savoir un axe dit longitudinal X qui est orienté le long du dispositif 1, et deux axes médian Y et transversal Z qui définissent un plan transversal YZ. De plus, les adjectifs « supérieur » et « inférieur » par rapport au dispositif 1 ou au réservoir 6 sont définis selon respectivement le sens d'une flèche F et le sens opposé de la flèche F.

Comme représenté sur les figures 3 et 4 notamment, l'armature 3 comporte une pluralité de tiges 7 et au moins un anneau 8 agencé dans la partie supérieure du dispositif 1 (ci-après « anneau 8 supérieur »).

Dans un mode de réalisation préféré, l'anneau 8 supérieur est de forme circulaire de centre O appartenant à l'axe longitudinal X. L'anneau 8 supérieur est, de plus, agencé dans un plan transversal YZ perpendiculaire à l'axe longitudinal X. Dans ce mode de réalisation préféré, l'anneau 8 supérieur est extensible dans une direction radiale perpendiculaire à l'axe longitudinal X, comme représenté par des flèches E. À titre d'exemple, l'anneau 8 supérieur est un ressort.

L'anneau 8 supérieur peut être amené d'un premier état, comme représenté sur la figure 4, à un second état, comme représenté sur la figure 3. La taille de l'anneau 8 supérieur dans le premier état est inférieure à la taille de l'anneau 8 supérieur dans le second état.

Par ailleurs, les tiges 7 sont agencées autour de l'anneau 8 supérieur. Dans un mode de réalisation particulier, l'armature 3 comporte huit tiges 7.

Ces tiges 7 sont réalisées, de préférence, en aluminium. L'utilisation de tiges 7 en aluminium permet de ne pas alourdir l'armature 3 ce qui augmente les performances de l'engin spatial au cours de son vol.

Dans un mode de réalisation préféré, chacune des tiges 7 de l'armature 3 est pourvue d'une extrémité 9A par laquelle elle est fixée à l'anneau 8 supérieur. Comme représenté sur la figure 3, les extrémités 9A de deux des tiges 7 adjacentes autour de l'anneau 8 supérieur forment, avec l'axe longitudinal X, un angle α. Les tiges 7 sont disposées autour de l'anneau 8 supérieur à des angles α sensiblement égaux. De plus, chacune des tiges 7 est agencée dans un plan radial défini par l'axe longitudinal X et une flèche E.

Dans ce mode de réalisation préféré, chacune des tiges 7 comprend également une extrémité 9B, opposée à l'extrémité 9A. Les tiges 7 sont agencées individuellement, par leurs extrémités 9B, dans des éléments de maintien 4. Le nombre de tiges 7 est identique au nombre d'éléments de maintien 4. Une seule des tiges 7 est associée à un seul des éléments de maintien 4.

Dans un mode de réalisation particulier, représenté sur les figures 3, 4 et 6, l'armature 3 comporte, de plus, un anneau 10 agencé dans une partie inférieure de l'armature 3. Cet anneau 10 dit inférieur est fixé sur une zone de chacune des tiges 7 proches de leurs secondes extrémités 9B. De plus, l'anneau 10 inférieur est rigide. Sa taille est identique à la taille de l'anneau 8 supérieur lorsque l'anneau 8 supérieur est dans le premier état, comme représenté sur la figure 4.

Par ailleurs, comme représenté sur les figures 1, 2 et 5, les éléments de maintien 4 sont fixés à la pièce 5 de section circulaire. Dans un mode de réalisation particulier, cette pièce 5 est un élément amovible agencé dans une partie inférieure du réservoir 6. Le dispositif 1 est alors fixé de manière rigide au réservoir 6. À titre d'exemple, une pièce 5 sur laquelle sont fixés les éléments de maintien 4 est une porte d'accès au réservoir 6 par une extrémité inférieure.

En outre, les éléments de maintien 4 sont agencés en cercle sur le bord de la pièce 5. Le cercle est centré autour de l'axe longitudinal X. La taille du cercle formé par les éléments de maintien 4 est sensiblement égale à la taille de l'anneau 8 supérieur lorsqu'il est dans le premier état.

Dans un mode de réalisation préféré, une tige 7 particulière et un élément de maintien 4 particulier, dans laquelle elle est agencée, forment une liaison pivot (non représentée). Cette liaison pivot rend la tige 7 apte à effectuer des mouvements de rotation autour d'un axe tangentiel perpendiculaire à l'axe longitudinal X selon un angle β, comme représenté sur la figure 3. Les premier et second états de l'anneau 8 supérieur définissent, respectivement, un angle minimal et un angle dit angle de déploiement de chacune des tiges 7. À titre d'exemple, l'angle minimal est égal à zéro et correspond à une position des tiges 7 parallèle à l'axe longitudinal X, comme représenté sur la figure 4.

De plus, chacun des éléments de maintien 4 comprend un système de verrouillage (non représenté). Ce système de verrouillage permet de bloquer les tiges 7 dans une position particulière associée à un angle β particulier. À titre d'exemple, un système de verrouillage est un verrou ou un clip.

Par ailleurs, dans un mode de réalisation préféré, le filet 2 est agencé le long des tiges 7 selon l'axe longitudinal X et autour de l'anneau 8 supérieur. Le filet 2 est réalisé dans un matériau polymère. Ce type de matériau permet d'obtenir un filet 2 souple et léger.

En outre, le maillage du filet 2 est adapté à la viscosité du fluide qui doit être amorti, notamment de l'hydrogène liquide, présent dans le réservoir 6 dans lequel le dispositif 1 est agencé. Le maillage du filet 2 est défini par au moins un paramètre représentatif de la porosité du filet 2. À titre d'exemple, le paramètre de porosité du filet 2 est compris entre 0.3 et 0.5.

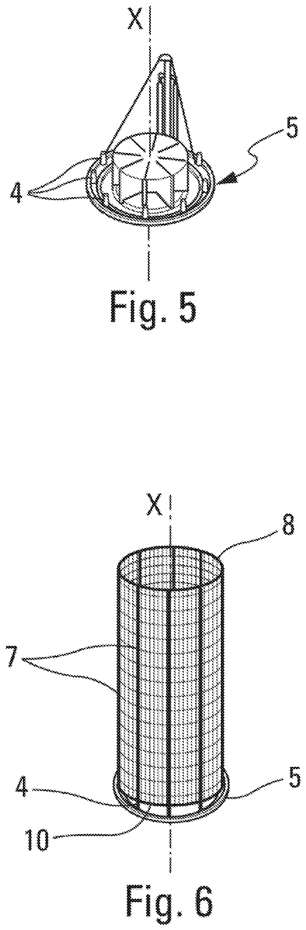

Dans le cadre de la présente invention, le dispositif 1 peut être amené d'une position repliée P2, représentée sur les figures 4 et 6, à une position dépliée P1, représentée par la figure 3. La position repliée P2 du dispositif 1 est associée à une configuration de l'armature 3 telle que l'anneau 8 supérieur est dans le premier état et l'angle β entre chacune des tiges 7 et l'axe longitudinal X est égal à l'angle minimal (de préférence nul). Les tiges 7 sont sensiblement parallèles à l'axe longitudinal X.

La position dépliée P1 du dispositif 1 est associée à une autre configuration de l'armature 3. Dans cette autre configuration, l'anneau 8 supérieur est dans le second état. L'angle β entre chacune des tiges 7 et l'axe longitudinal X correspond à l'angle de déploiement. La valeur de cet angle de déploiement dépend du paramètre de porosité du maillage du filet 2 et de la viscosité du fluide.

Le mode de mise en place et de fonctionnement du dispositif 1 d'amortissement de fluide, tel que décrit ci-dessus, est présenté ci-après dans un mode de réalisation particulier pour une application préférée dans un réservoir d'un engin spatial.

Avant le vol d'un engin spatial, le dispositif 1 est fixé dans le réservoir 6. Pour ce faire, l'armature 3 et le filet 2 sont dans une configuration repliée, comme représenté par la figure 4. La configuration repliée de l'armature 3 et du filet 2 correspond à des tiges 7 sensiblement parallèles entre elles et avec l'axe longitudinal X et à un anneau 8 supérieur dans le premier état.

Comme représenté sur la figure 5, les éléments de maintien 4 sont ensuite fixés sur la pièce 5. Cette pièce 5, qui est amovible, peut être la porte d'accès au réservoir 6 qui est agencée dans la partie inférieure du réservoir 6. Les éléments de maintien 4 sont agencés en cercle, comme représenté sur la figure 5.

Les tiges 7, qui forment l'armature 3 avec l'anneau 8 supérieur et l'anneau 10 inférieur, sont agencées dans les éléments de maintien 4. Comme représenté sur la figure 6, le dispositif 1, qui est dans sa position repliée P2, est fixé sur la porte d'accès du réservoir 6.

Le dispositif 1 est ensuite introduit dans le réservoir 6 par un orifice agencé dans la partie inférieure du réservoir 6. Cet orifice correspond à l'emplacement de la porte d'accès. À titre d'exemple, le diamètre de l'orifice peut être de soixante-cinq centimètres. Lorsque cette porte d'accès est fixée au réservoir 6, le dispositif 1 est amené de la position repliée P2 à une position dépliée P1. Dans cette position dépliée P1, l'anneau 8 supérieur se trouve dans le second état. L'anneau 8 supérieur est un ressort, qui exerce une force de rappel dans une direction opposée à la direction radiale des flèches E. Le dispositif 1 est alors maintenu en position dépliée P1 dans le réservoir 6, par le verrouillage des tiges 7 par les systèmes de verrouillage des éléments de maintien 4.

Le dispositif 1 est déplié avant le remplissage du réservoir 6 par le fluide et l'angle de déploiement est choisi en fonction de la viscosité du fluide et du paramètre de porosité du maillage du filet 2, de manière à limiter les mouvements de ballotement du fluide. Lorsque le dispositif 1 est déplié et verrouillé, le réservoir 6 est rempli de fluide.

Une application préférée du dispositif 1 est l'amortissement de mouvements de ballotement de l'hydrogène liquide présent dans le réservoir 6 d'un engin spatial.

La trajectoire réelle de l'engin spatial, en particulier un lanceur, est régulièrement ajustée au cours de son vol. Ces ajustements sont réalisés par l'activation des moteurs fusées des étages successifs. Les ergols de l'étage supérieur tels que l'oxygène liquide et l'hydrogène liquide bougent alors dans leurs réservoirs respectifs à chaque contrôle de l'attitude des étages précédents. Ces ajustements ont lieu lorsque le lanceur a quitté l'atmosphère terrestre et se trouve dans un milieu de faible gravité voire de micro gravité.

Sans amortissement de ces mouvements de ballotement, les ergols notamment l'hydrogène liquide risquent d'être vaporisés au contact de zones chaudes de leur réservoir 6, ce qui diminue d'autant la quantité d'ergols utilisable par l'engin spatial au cours de son vol.

Au cours du vol, le niveau d'hydrogène liquide décroît. La surface libre entre le gaz et l'hydrogène liquide vient en contact du filet 2. Le paramètre de porosité du maillage du filet 2 est associé au nombre de Carpenter-Keulegan. Ce paramètre de porosité caractérise les effets de la viscosité de l'hydrogène liquide et le degré de porosité du maillage par rapport notamment à l'amplitude de sollicitation, par exemple les mouvements de ballotement. La valeur du paramètre de porosité est sensiblement égale à 0.4 de manière à maximiser un rapport d'amortissement lorsque le nombre de Carpenter-Keulegan est égal à 1.

Les mouvements de ballotement de l'hydrogène liquide sont réduits en partie ou totalement par le dispositif 1 dont l'efficacité dépend de l'angle de déploiement et du paramètre de porosité du maillage du filet. À titre d'exemple, des mouvements de ballotement sont réduits si le paramètre de porosité est égal à 0.4 pour un angle de déploiement de 60 degrés.

De plus, les dimensions du dispositif 1 sont choisies de manière à ce qu'il soit efficace en fonction du maximum d'hydrogène liquide dans le réservoir 6 lorsque les ajustements de la trajectoire sous micro gravité ou faible gravité ont lieu. À titre d'exemple, le dispositif 1, une fois déplié, mesure cinq mètres de diamètre et cent cinquante centimètres de hauteur selon l'axe longitudinal X.

Le dispositif 1 d'amortissement de fluide, tel que décrit ci-dessus, présente les avantages suivants :
- il est adaptable à divers fluides et/ou à divers types de réservoirs d'engin spatial, afin de réduire les mouvements de ballotement et ses conséquences ;
- il est léger, ce qui permet un accroissement des performances globales du lanceur ;
- il est adaptable à diverses phases de vol de l'engin spatial ; et
- il peut également permettre de briser des vortex et/ou de retenir des bulles pouvant se créer dans le fluide lors de mouvements de ballotement.

Par ailleurs, les effets de capillarité du filet, en micro gravité, permettent au dispositif de drainer le ou les ergols liquide vers le fond du réservoir.

## Revendications

1. Dispositif d'amortissement d'un fluide destiné à un réservoir (6), en particulier d'un engin spatial, comportant une armature (3) pourvue d'au moins un anneau (8) et d'une pluralité de tiges (7), chacune desdites tiges (7) étant fixée par une première extrémité (9A) autour dudit anneau (8), ledit dispositif (1) comportant un filet (2) agencé sur la pluralité de tiges (7) et autour de l'anneau (8), le filet (2) comprenant un maillage adapté à la viscosité du fluide à amortir de manière à amortir des mouvements dudit fluide, ledit dispositif (1) comportant, de plus, une pluralité d'éléments de maintien (4), chacune des tiges (7) étant agencée dans un élément de maintien (4) par une seconde extrémité (9B) opposée à la première extrémité (9A), **caractérisé en ce que**
le dispositif est configuré pour pouvoir être amené d'une position repliée (P2) à une position dépliée (P1), la position repliée (P2) correspondant à une position du dispositif (1) dans laquelle les tiges (7) sont agencées sensiblement parallèlement entre elles et chacune desdites tiges (7) forme un angle nul avec un axe dit axe longitudinal (X) dudit dispositif (1), la position dépliée (P1) correspondant à une position du dispositif (1) dans laquelle les tiges (7) ne sont pas parallèles entre elles et chacune desdites tiges (7) forme un angle dit angle de déploiement (β), ledit angle de déploiement (β) étant non nul avec l'axe longitudinal (X).

2. Dispositif selon la revendication 1, **caractérisé en ce que** chacun des éléments de maintien (4) est destiné à être fixé sur une pièce (5) et à maintenir le dispositif (1) au moins dans la position dépliée (P2).

3. Dispositif selon l'une quelconque des revendications précédentes, **caractérisé en ce que** chacun des éléments de maintien (4) comporte un système de verrouillage apte à verrouiller les tiges (7) dans une position correspondant à une position dépliée (P1) du dispositif (1).

4. Dispositif selon l'une quelconque des revendications précédentes, **caractérisé en ce que** l'anneau (8) est extensible dans une direction dite radiale et configuré pour pouvoir être amené d'un premier état lorsque le dispositif (1) est dans la position repliée (P2) à un second état lorsque le dispositif (1) est dans la position dépliée (P1), la taille dudit anneau (8) dans ledit premier état étant inférieure à la taille dudit anneau (8) dans ledit second état.

5. Dispositif selon l'une quelconque des revendications précédentes, **caractérisé en ce que** les tiges (7) sont réparties à intervalles angulaires réguliers autour de l'anneau (8).

6. Réservoir, en particulier pour engin spatial, caractérisé en qu'il comprend un dispositif (1) d'amortissement de fluide, selon l'une quelconque des revendications 1 à 5.

7. Réservoir selon la revendication 6, **caractérisé en ce qu'**il comprend une pièce (5) agencée dans une partie inférieure, ladite pièce (5) étant configurée pour fixer le dispositif (1) sur ledit réservoir (6), ladite pièce (5) étant amovible.

8. Engin spatial comprenant un réservoir (6) selon l'une des revendications 6 et 7.

## Patentansprüche

1. Vorrichtung zum Dämpfen eines für einen Tank (6) bestimmten Fluids, insbesondere eines Raumfahrzeugs, umfassend ein Gerüst (3), das mit mindestens einem Ring (8) und mehreren Stäben (7) versehen ist, wobei jeder der Stäbe (7) durch ein erstes Ende (9A) um den Ring (8) herum befestigt ist, wobei die Vorrichtung (1) ein Netz (2) umfasst, das an den mehreren Stäben (7) und um den Ring (8) herum angeordnet ist, wobei das Netz (2) eine Maschenweite umfasst, die an die Viskosität des zu dämpfenden Fluids angepasst ist, um Bewegungen des Fluids zu dämpfen, wobei die Vorrichtung (1) ferner mehrere Halteelemente (4) umfasst, wobei jeder der Stäbe (7) mit einem zweiten Ende (9B), das dem ersten Ende (9A) gegenüberliegt, in einem Halteelement (4) angeordnet ist, **dadurch gekennzeichnet, dass**
die Vorrichtung dazu konfiguriert ist, um von einer zusammengeklappten Position (P2) in eine aufgeklappte Position (P1) gebracht werden zu können, wobei die zusammengeklappte Position (P2) einer Position der Vorrichtung (1) entspricht, in der die Stäbe (7) im Wesentlichen parallel zueinander angeordnet sind und jeder der Stäbe (7) einen Nullwinkel mit einer Achse bildet, die als Längsachse (X) der Vorrichtung (1) bezeichnet wird, wobei die aufgeklappte Position (P1) einer Position der Vorrichtung (1) entspricht, in der die Stäbe (7) nicht parallel zueinander sind und jeder der Stäbe (7) einen Winkel bildet, der als Aufklappwinkel (β) bezeichnet wird, wobei der Aufklappwinkel (β) mit der Längsachse (X) nicht null ist.

2. Vorrichtung nach Anspruch 1, **dadurch gekennzeichnet, dass** jedes der Halteelemente (4) dazu bestimmt ist, an einem Teil (5) befestigt zu sein und die Vorrichtung (1) zumindest in der aufgeklappten Position (P2) zu halten.

3. Vorrichtung nach einem der vorhergehenden Ansprüche, **dadurch gekennzeichnet, dass** jedes der Halteelemente (4) ein Verriegelungssystem umfasst, das in der Lage ist, die Stäbe (7) in einer Position zu verriegeln, die einer aufgeklappten Position (P1) der Vorrichtung (1) entspricht.

4. Vorrichtung nach einem der vorhergehenden Ansprüche, **dadurch gekennzeichnet, dass** der Ring (8) in einer radialen Richtung dehnbar und dazu konfiguriert ist, von einem ersten Zustand, wenn sich die Vorrichtung (1) in der zusammengeklappten Position (P2) befindet, in einen zweiten Zustand, wenn sich die Vorrichtung (1) in der aufgeklappten Position (P1) befindet, gebracht werden zu können, wobei die Größe des Rings (8) in dem ersten Zustand kleiner ist als die Größe des Rings (8) in dem zweiten Zustand.

5. Vorrichtung nach einem der vorhergehenden Ansprüche, **dadurch gekennzeichnet, dass** die Stäbe (7) in regelmäßigen Winkelabständen um den Ring (8) herum verteilt sind.

6. Tank, insbesondere für ein Raumfahrzeug, **dadurch gekennzeichnet, dass** er eine Vorrichtung (1) zum Dämpfen eines Fluids nach einem der Ansprüche 1 bis 5 umfasst.

7. Tank nach Anspruch 6, **dadurch gekennzeichnet, dass** es ein Teil (5) umfasst, das in einem unteren Bereich angeordnet ist, wobei das Teil (5) dazu konfiguriert ist, die Vorrichtung (1) an dem Tank (6) zu befestigen, wobei das Teil (5) entfernbar ist.

8. Raumfahrzeug, das einen Tank (6) nach einem der Ansprüche 6 und 7 umfasst.

## Claims

1. A device for damping a fluid intended for a tank (6), in particular of a spacecraft, including a frame (3) provided with at least one ring (8) and a plurality of rods (7), each of said rods (7) being attached by a first end (9A) about said ring (8), said device (1) including a net (2) arranged on the plurality of rods (7) and about the ring (8), the net (2) comprising a mesh adapted to the viscosity of the fluid to be damped so as to damp the motions of said fluid, said device (1) including, additionally, a plurality of holding elements (4), each of the rods (7) being arranged in a holding element (4) by a second end (9B) opposite the first end (9A), **characterised in that**
the device is configured to be able to be brought from a folded position (P2) to an unfolded position (P1), the folded position (P2) corresponding to a position of the device (1) in which the rods (7) are arranged substantially parallel to one another and each of said rods (7) forms a zero angle with a so-called longitudinal axis (X) of said device (1), the unfolded position (P1) corresponding to a position of the device (1) in which the rods (7) are not parallel to one another and each of said rods (7) forms a so-called extension angle (β), said extension angle (β) being non-zero with the longitudinal axis (X).

2. The device according to claim 1, **characterised in that** each of the holding elements (4) is intended to be attached to a piece (5) and to hold the device (1) at least in the unfolded position (P2).

3. The device according to any of the preceding claims, **characterised in that** each of the holding elements (4) includes a locking system capable of locking the rods (7) into a position corresponding to an unfolded position (P1) of the device (1).

4. The device according to any of the preceding claims, **characterised in that** the ring (8) is extensible in a so-called radial position and configured to be able to be brought from a first state when the device (1) is in the folded position (P2) to a second state when the device (1) is in the unfolded position (P1), the size of said ring (8) in said first state being less than the size of said ring (8) in said second state.

5. The device according to any of the preceding claims, **characterised in that** the rods (7) are distributed at regular angular intervals about the ring (8).

6. A tank, in particular for a spacecraft, **characterised in that** it comprises a fluid damping device (1), according to any of claims 1 to 5.

7. The tank according to claim 6, **characterised in that** it comprises a piece (5) arranged in a lower part, said piece (5) being configured to attach the device (1) to said tank (6), said piece (5) being removable.

8. A spacecraft comprising a tank (6) according to one of claims 6 to 7.
